# EUROPEAN PATENT APPLICATION

(11) **EP 2 475 115 A1**
(43) Date of publication of application: **11.07.2012**
(21) Application number: 11195915.1
(22) Date of filing: 28.12.2011
(51) Int. Cl.: H04H 20/62

(54) **An interoperability unit for adding external sources in a vehicle**

(30) Priority: 05.01.2011 GB 201100087
(71) Applicant: Connects2 Limited, Birmingham West Midlands DY4 9HG (GB)
(72) Inventor: Whitehouse, Jon, Bilston, Wolverhampton West Midlands, WV14 9UG (GB); Buxton, Neil, Stoke-on-Trent Staffordshire, ST4 8NJ (GB)
(74) Representative: Sessford, Russell

(57) **Abstract**

An interoperability unit for adding a media source to a vehicle media system, the unit comprising: an interface module configured to transmit a command signal through a first connection and to receive a command signal through a second connection; a media module configured to output a media signal; and a compatibility module configured, in a first mode of operation, to cause a first command signal received through the second connection of the interface module to be re-transmitted through the first connection of the interface module, and, in a second mode of operation, to intercept a first command signal received through the second connection of the interface module and to use the first command signal to control an aspect of the media signal output by the media module.

## Description

### Description of Invention

Embodiments of the present invention relate to an interoperability unit for adding a media source to a vehicle media system, along with associated apparatus and methods.

Conventional vehicle media systems comprise a base unit (often referred to as a head unit). The head unit is fitted to a vehicle dashboard - usually in a central portion thereof.

The head unit includes a user interface through which a user can interact with the vehicle media system and may also include a media module such as a Compact Disc player. Some head units are connected to remote media modules which may be located elsewhere in the vehicle - for example in the boot of the vehicle (i.e. in the trunk of the vehicle).

The majority of vehicle media systems also include an analogue or digital radio receiver. The analogue radio broadcasts may include, for example, Frequency Modulated (FM) and Amplitude Modulated (AM) transmissions. In many countries, digital radio broadcasts use the Digital Audio Broadcasting (DAB) system or other systems which are based on the MPEG-1 Audio Layer II codec. It will be appreciated that other countries use other digital broadcasting systems.

The adoption of digital radio broadcasts has been slow in many countries. Accordingly, even though such broadcasts are becoming more common, vehicles are still produced with manufacturer fitted vehicle media systems which include an analogue radio receiver but not a digital radio receiver. In addition, there are a large number of existing vehicle media systems (be they systems which were fitted by a manufacturer or by a third party after manufacture of the vehicle) which do not include a digital radio receiver.

In many countries, the analogue radio broadcasts in one or more areas of the country are being discontinued as part of a complete or staged transfer of all local radio broadcasting from analogue radio broadcasts to digital radio broadcasts. Therefore, there will be many vehicle media systems which have redundant analogue radio receivers and no digital radio receiver to allow the user to continue to receive radio broadcasts.

The user must then contemplate the replacement of the head unit of the vehicle media system - which is expensive.

It is known to provide portable digital radio receivers (with their own power supply and speakers) which may be placed in a vehicle.

The provision of a portable digital radio receiver is problematic because any user interface controls provided in the vehicle for the vehicle media system cannot be used to control the portable digital radio receiver - for example, steering column or steering wheel mounted driver controls cannot be used to control to the volume or to change the radio station. In addition, an unsecured portable digital radio receiver may move during operation of the vehicle and this could be hazardous. Furthermore, the speakers of portable digital radio receivers often output poor quality sound when compared to speakers of the vehicle media system. Finally, the provision of a separate power supply (e.g. batteries) can be expensive - although some digital radio receivers may include a connector to allow the receiver to be connected to a power supply of the vehicle, such connectors often result in loose wires being present within the vehicle (which may be hazardous and/or prone to damage).

It is also known to provide digital radio receivers suitable to be fitted to a vehicle which receive digital radio broadcasts and re-transmit the digital radio broadcasts locally (i.e. with a limited range) using an analogue radio broadcasting signal (usually an FM signal). Thus, a conventional analogue radio receiver of a vehicle media system can receive the digital radio broadcast through the digital radio receiver via an analogue radio broadcast.

The re-transmission of digital radio broadcasts as analogue radio broadcasts is problematic because this process will introduce significant noise into the audio signal and will be prone to interference from other radio signals. Such digital radio receivers my have the same power supply and movement issues as a portable digital radio receiver (as discussed above). In re-transmission based systems, the analogue radio broadcast is received by the head unit and processed in the same manner as a normal analogue radio broadcast. Accordingly, the vehicle media system will use its own amplifier and speakers to process and output the audio signal to the user. Thus, some of the user interface controls provided for the vehicle media system will control aspects of the output of the audio signal. For example, the volume controls will still be operable. However, the user cannot change digital radio stations by use of these user interfaces because they are not connected in any manner to the digital radio receiver. In addition, any text information output by the digital radio receiver is typically only viewable on a display screen of the digital radio receiver. The digital radio receivers can, therefore, be intrusive within the vehicle because they must be positioned securely with respect to the user so that the user can view the display screen. Such digital radio receivers are often secured to the windscreen of the vehicle by a suction cup - in this position the receiver obscures part of the view of the driver of the vehicle and this may be hazardous.

Some conventional head units include an auxiliary audio input. Such an input typically comprises a socket attached to the head unit and configured to receive a plug from a media device. Thus, it is possible to connect, for example, a portable digital radio receiver to the head unit without the re-transmission of the digital broadcast as an analogue broadcast. In such arrangements, the output from the portable digital radio receiver is transmitted to the speakers of the vehicle media system thus overcoming some of the problems associated with poor quality speakers in such devices. However, the problems associated with control of the digital radio receiver are still present and the problems of loose wires within the vehicle are increased.

It is known to provide replacement head units which may, for example, include a digital radio receiver. The replacement head unit must include connections and input/output interfaces which are compatible with the parts of the existing or manufacturer installed vehicle media system if the replacement head unit is to use these parts. For example, the replacement head unit must be configured to receive inputs and/or issue outputs to auxiliary units - such as a steering column mounted control unit and/or a display screen. Not only, therefore, is the replacement of a head unit expensive but the replacement is also problematic with regard to ensuring compatibility with other components of the vehicle media system.

It will be appreciated that there are, therefore, numerous problems associated with upgrading a vehicle media system to include a digital radio receiver.

It will be further understood that the upgrading of a vehicle media system to include a digital radio receiver is just one example of an upgrade in relation to which there are numerous problems. Similar problems exist in relation to the upgrading of the vehicle media system to include other media inputs and devices - such as other streamed media devices (e.g. an internet radio device) or locally stored digital media devices (e.g. a device for playing stored digital media files such as MP3-, OGG-, AAC-, and WMA- files and the like). Embodiments of the present invention seek to overcome one or more problems associated with the prior art.

Accordingly, one aspect of the present invention provides an interoperability unit for adding a media source to a vehicle media system, the unit comprising: an interface module configured to transmit a command signal through a first connection and to receive a command signal through a second connection; a media module configured to output a media signal; and a compatibility module configured, in a first mode of operation, to cause a first command signal received through the second connection of the interface module to be re-transmitted through the first connection of the interface module, and, in a second mode of operation, to intercept a first command signal received through the second connection of the interface module and to use the first command signal to control an aspect of the media signal output by the media module.

Another aspect of the present invention provides an interoperability unit for adding a media source to a vehicle media system, the unit comprising: an interface module configured to transmit a command signal through a first connection to a head unit of the vehicle media system and to receive a command signal through a second connection from an input auxiliary unit of the vehicle media system; a media module configured to output a media signal; an amplification module configured to amplify an audio media signal output by the media module; and a compatibility module configured, in a first mode of operation, to cause a first command signal received through the second connection of the interface module to be re-transmitted through the first connection of the interface module, and, in a second mode of operation, to intercept a first command signal received through the second connection of the interface module and to use the first command signal to control an aspect of the media signal output by the media module using the amplification module.

The compatibility module may be configured, in the first mode of operation, to prevent the output of the media signal from the interoperability unit.

The compatibility module may be further configured, in the first mode of operation, to prevent the output of the media signal from the media module.

The unit may further comprise a switch module and a media input, wherein the switch module is configured to receive a control signal from the compatibility module and to switch, in response to the control signal, between a first configuration in which a media signal received from the media input is output by the interoperability unit and a second configuration in which a media signal output by the media module is output by the interoperability unit.

The media signal may comprise an audio or a video media signal.

The unit may further comprise an amplification module configured to amplify an audio media signal output by the media module.

The media module may be a streamed digital media device.

The media module may be a digital radio receiver.

The media module may be a DAB radio receiver.

When in the second mode of operation, the compatibility module may be configured, in response to the command signal, to change station or channel.

The media module may be a locally stored digital media device.

The unit may further comprise a text output module configured to output encoded text information.

The encoded text information may be output using the RDS protocol.

The unit may further comprise an auto-tune module configured to transmit an auto-tune signal.

Another aspect of the present invention provides a vehicle media system including a unit as above.

The vehicle media system may further comprise a head unit coupled to the interoperability unit by the first connection.

The vehicle media system may further comprise an input auxiliary unit coupled to the interoperability unit by the second connection.

The input auxiliary unit may be a steering wheel or steering column mounted user control interface.

The vehicle media system may further comprise an output auxiliary unit.

The output auxiliary unit may comprise at least one speaker and/or at least one display screen.

Another aspect of the present invention provides a vehicle including a vehicle media system as above.

Another aspect of the present invention provides a method of fitting an interoperability unit to a vehicle media system, the method comprising: connecting the interoperability unit between at least two components of the vehicle media system.

Another aspect of the present invention provides a method of fitting an interoperability unit to a vehicle media system, the method comprising: connecting the interoperability unit between at least two components of the vehicle media system, the at least two components including the head unit and the input auxiliary unit.

Aspects of embodiments of the present invention are described, by way of example, with reference to the accompanying drawings in which:
Figure 1 shows the connectivity of an embodiment;
Figure 2 shows an interoperability unit of an embodiment;
Figure 3 shows an interoperability unit of an embodiment;
Figure 4 shows a vehicle, vehicle media system, and interoperability unit of embodiments in schematic form; and
Figure 5 shows a method of an embodiment.

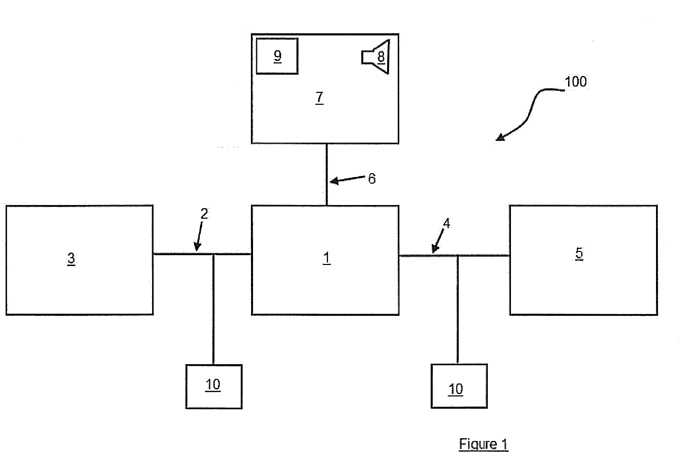

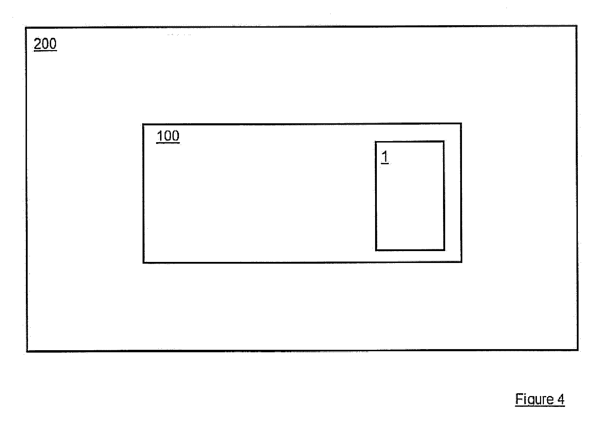

With reference to figure 4, an embodiment of the present invention comprises an interoperability unit 1 for a vehicle media system 100. The interoperability unit 1 is configured to be connected to the vehicle media system 100 of a vehicle 200 and thereafter to form a part thereof. The connection to the vehicle media system 100 is such that many connections between a head unit 3 (see figure 1) of the vehicle media system 100 and other modules thereof 5,7,10 (see figure 1) pass through the interoperability unit 1 which may interact with one or more of these signals to provide the required functionality - as is described below.

### Interoperability Unit Connections

Figure 1 shows the general connections of the interoperability unit 1 to other parts of the vehicle media system 100.

Accordingly, there is a first connection 2 between the interoperability unit 1 and the head unit 3, and a second connection 4 between the interoperability unit 1 and at least one input auxiliary unit 5 - for example, a user interface control unit such as a steering column or steering wheel mounted user interface control unit. A third connection 6 is provided between the interoperability unit 1 and at least one output auxiliary unit 7 - for example one or more speakers 8 and/or one or more video displays 9.

The first connection 2 is configured to transmit one or more media signals from the head unit 3 to the interoperability unit 1, and to transmit one or more command signals from the interoperability unit 1 to the head unit 3. In some embodiments, the first connection 2 is further configured to transmit one or more command signals from the head unit 3 to the interoperability unit 1 - for example to control some other part of the vehicle media system 200 which is remote from the head unit 3.

The one or more media signals may include an audio and/or a video signal.

The first connection 2 includes a plurality of conductors (such as wires) which couple respective terminals of the interoperability unit 1 to respective terminals of the head unit 3. The first connection 2 may be a direct coupling of the interoperability unit 1 to the head unit 3 with no other units coupled by the first connection 2 to either the interoperability unit 1 or the head unit 3. The first connection 2 may be a shared coupling of the interoperability unit 1 to the head unit 3 which is shared with one or more other units 10 also coupled to one or both units 1,3 by the first connection 2. The first connection 2 may comprise a plurality of sub-connections which may be of one or more different types (e.g. one sub-connection may be a shared coupling and one may be a direct coupling). The first connection 2 may include a bus or network connection or sub-connection (such as a CAN-Bus, MOST-Bus, and LIN-Bus connection) and preferably also includes a media signal connection or sub-connection.

The second connection 4 is configured to transmit one or more command signals from the or each input auxiliary unit 5 to the interoperability unit 1. As mentioned above, an input auxiliary unit 5 may be a steering column or steering wheel mounted user interface control unit and may more generally be described as a unit which is configured to receive user input to control an aspect of the operation of the vehicle media system 100. Accordingly, an input auxiliary unit 5 may include one or more buttons, dials, or user selectable options.

In an embodiment, the second connection 4 is a direct, unshared, coupling between the or each input auxiliary unit 5. This direct coupling may be achieved through, for example, a pair of conductors in the form of wires which couple respective terminals of the interoperability unit 1 to respective terminals of the or each auxiliary input unit 5 (each auxiliary input unit 5 may have a separate and distinct direct coupling to the interoperability unit 1). In an embodiment, the second connection 4 is a shared coupling between a plurality of input auxiliary units 5 and the interoperability unit 1. In an embodiment, the second connection 4 is a shared coupling between at least one input auxiliary unit 5, one or more other units 10, and the interoperability unit 1.

In an embodiment, the second connection 4 includes a bus or network connection such as a CAN-Bus, MOST-Bus, or LIN-Bus connection.

The third connection 6 is configured to transmit at least one media signal from the interoperability unit 1 to at least one of the or each output auxiliary units 7. The media signal may include a video signal and/or an audio signal. For example, the third connection 6 may comprise a first and a second pair of conductors (e.g. wires) which couple terminals of the interoperability unit 1 to terminals of a first and a second speaker 8 respectively.

The third connection 6 preferably includes a direct coupling between the interoperability unit 1 and the or each output auxiliary unit 7 - in other words, the third connection 6 may include separate sub-connections for the or each output auxiliary unit 7, wherein each sub-connection is not shared by any other output auxiliary unit 7. Each sub-connection may be configured to transmit a different media signal (e.g. a left audio signal, a right audio signal, a base audio signal, a treble audio signal, a video signal, etc). In an embodiment, a single output auxiliary unit 7 may comprise a plurality of sub-units - for example a plurality of speakers which are configured to receive substantially the same media signal from the interoperability unit 1.

Thus, the interoperability unit 1 may be coupled to a head unit 3, an input auxiliary unit 5, and an output auxiliary unit 7 (and may be coupled to one or more other units 10). The interoperability unit 1 acts as an intermediary between these units 3,5,7,10 to ensure substantially correct operation of the vehicle media system.

### Summary - Function of the Interoperability Unit

The interoperability unit 1 has two main modes of operation: a pass-through mode (a first mode of operation) and an override mode (a second mode of operation). These modes of operation are discussed in more detail below in relation to the specific functional modules of the interoperability unit 1.

In overview of the modes of operation of the interoperability unit 1, when in the pass-through mode the interoperability unit 1 re-transmits the majority of command signals received by the unit 1 to the intended recipient. Thus, command signals issued from an input auxiliary unit 5 are received by the interoperability unit 1 through the second connection 4 and re-transmitted to the intended recipient - which may be the head unit 3 for example and, as such, re-transmission occurs through the first connection 2.

The head unit 3 may output one or more command signals in an embodiment, and, when in pass-through mode, the interoperability unit 1 will re-transmit the or each such command signal to the intended recipient (which may be another component or unit of the vehicle media system 100).

In the pass-through mode of operation, the interoperability unit 1 also permits the transmission of one or more media signals from the head unit 3 to one or more of the output auxiliary units 7. Accordingly, the vehicle media system 100 operates substantially as if the interoperability unit 1 were not present. The operation of the interoperability unit 1 is substantially invisible to the user in the pass-though mode of operation.

The interoperability unit 1, however, changes modes from the pass-through to the override mode when a predetermined command signal is received (this may be a command signal of a predetermined length, a predetermined sequence of command signals, a predetermined individual command signal, or a predetermined frequency of repetition of a particular command signal over a predetermined period of time, for example).

When in the override mode, the interoperability unit 1 takes over the transmission of at least one media signal to one or more of the output auxiliary units 7 and prevents the transmission of any media signals from the head unit 3 to any of the one or more output auxiliary units 7.

In addition, the interoperability unit 1 is operable, in the override mode, to control an aspect of the at least one media signal transmitted by the interoperability unit 1 based on a received command signal. Therefore, for example, the interoperability unit 1 may increase the amplitude of a media signal being transmitted by the interoperability unit 1 to an output auxiliary unit 7 in response to the receipt of a corresponding command signal from an input auxiliary unit 5.

The interoperability unit 1 includes or is connected to a media source which is used to generate the or each media signal transmitted by the interoperability unit 1.

When in the override mode of operation, one or more command signals received by the interoperability unit 1 are used to alter an aspect of the operation of the interoperability unit 1 - for example to select a new track from the media source or to select a new radio station from the media source.

As will be appreciated, the changing of a track or the selection of a new radio station will have an effect on the media signal output by the media source and, hence, by the interoperability unit 1.

When in the override mode of operation, the interoperability unit 1 may prevent re-transmission of the majority of command signals to the head unit 3. Thus, the interoperability unit 1 takes over many of the functions of the head unit 1 when in override mode and this allows a new media source which is connected to or part of the interoperability unit 1 to be used to output one or more media signals to one or more output auxiliary units 7 of the vehicle media system 100 whilst still permitting control of an aspect of the media signal (which may include an aspect of the operation of the media source) by use of an input auxiliary unit 5.

### The Interoperability Unit

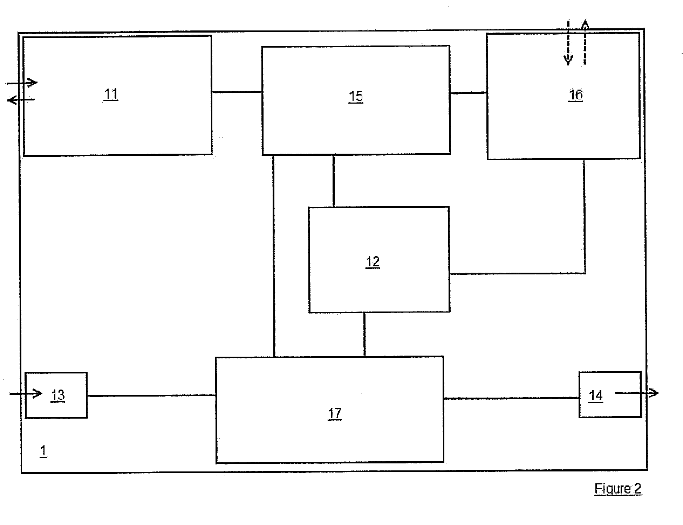

An embodiment of the interoperability unit 1 is shown in more detail in figure 2.

The interoperability unit 1 may, in an embodiment, comprise an interface module 11, an amplification module 12, a media input 13, a media output 14, a compatibility module 15, a media module 16, and a switch module 17.

These modules 11,12,13,14,15,16,17, and other modules of the interoperability unit 1 which are described in relation to other embodiments, are described herein as separate modules for ease of understanding. Any two or more of the modules 11,12,13,14,15,16,17 may be implemented as a single hardware unit. In addition, the functionality of any of the modules 11,12,13,14,15,16,17 may be split and combined.

### The Interoperability Unit - The Interface Module

The interface module 11 is coupled to the head unit 3 by the first connection 2 and is also coupled to one or more input auxiliary units 5 by the second connection 4. The interface module 11 is configured to receive one or more command signals from the or each input auxiliary unit 5 and may be configured to receive one or more command signals from the head unit 3. The interface module 11 may also be configured to receive one or more command signals from one or more other units 10 coupled to the interface module 11 by, for example, the first and/or second connection 2,4.

The other units 10 may be other units of the vehicle media system 100 or may be other units of the vehicle 200.

The one or more command signals may include, for example, an increase volume command, a decrease volume command, a next track command, a previous track command, a source change command, a mute command, a menu command, a scroll command, a select command, a next station command, a previous station command, and the like. In summary, the one or more command signals are intended to control an aspect of the operation of the vehicle media system 100 - be that the volume of any audio output or the navigation and selection of options through a menu system of the vehicle media system 100. The one or more command signals may include information signals which are not themselves commands but which are interpreted by an aspect of the vehicle media system 100 to be a command signal. For example, a command signal may include a signal indicative of the speed of a vehicle 200 to which the vehicle media system 100 is fitted. An aspect of the vehicle media system 100 may interpret an indication of an increase in vehicle speed as a command that the volume of audio output by the system 100 is to be increased. An aspect of the vehicle media system 100 may interpret an indication of movement of the vehicle 200 above a predetermined speed to be a command to discontinue the output of a media signal (for example, for safety, the display of video media on a display screen 9 may be discontinued if the vehicle 200 is sensed to be moving substantially).

The interface module 11 is configured to transmit one or more command signals to the head unit 3 may also be configured to transmit one or more command signals to one or more other units 10 or to one or more of the input auxiliary units 5 and/or one or more of the output auxiliary units 7.

### The Interoperability Unit - The Compatibility Module

The interface module 11 is communicatively coupled to the compatibility module 15. The function of the compatibility module 15 is to decide what actions are to be taken in response to the receipt of one or more command signals by the interface module 11.

The required action may depend on the vehicle type and/or vehicle media system type of which the interoperability unit 1 is a part when fitted thereto. Therefore, the compatibility module 15 is preferably a vehicle type (or vehicle media system type) specific compatibility module 15; however, it will be appreciated that a default or standard compatibility module 15 may be provided; equally, a multi-vehicle/system type compatibility module 15 may be provided. In an embodiment utilising a multi-vehicle/system type compatibility module 15 a user and/or an installer of the interoperability unit 1 may be provided with an interface through which the vehicle/system type to which the unit 1 is fitted (or is to be fitted) can be selected to ensure compatibility - as will become apparent below. This interface may be implemented in hardware - for example, a physical switch (not shown) of the interoperability unit 1, or a set of jumper pins (not shown) with a suitable moveable connector (not shown) adapted to select and communicatively connect a pair of the jumper pins. The interface may equally be implemented in software/firmware and altered through a graphical user interface. This graphical user interface may be provided through a display screen of the head unit 3, or a display screen 9 of an output auxiliary unit 7, or through the display screen of a maintenance and configuration device (not shown) which may be coupled to the interoperability unit 1 for the purposes of configuring the unit 1. In an embodiment, the compatibility module 15 automatically detects the vehicle/system type by the use of one or more handshaking signals issued by the interoperability unit 1 to another unit 10 or another part of the vehicle media system 100 and the associated response or responses to the or each handshaking signal.

The compatibility module 15 may be a removable module which can be unplugged from a part of interoperability unit 1 and replaced with an alternative compatibility module 15.

In an embodiment, the compatibility module 15 is configured to receive one or more command signals from the interface module 11 (the or each command signal having been received by the interface module 11 as described above). In this embodiment, the compatibility module 15 is further configured to analyse the or each command signal and take an action in response thereto. The action may be, as is described in more detail below, to command the interface module 11 to re-transmit the command signal to the intended recipient. The action may be to control an aspect of the operation of the amplification module 12 and/or the switch module 17 and/or the interface module 11 and/or the media module 16. The action may be performed by the issuance of at least one control signal.

In an embodiment, the compatibility module 15 is, therefore, communicatively coupled to the amplification module 12, the switch module 17, the interface module 11, and the media module 16.

In an embodiment, instead of or in addition to receiving the or each command signal, the compatibility module 15 is configured to receive a command signal identifier or a part of the command signal, that identifier or part identifying the type of command signal which has been received by the interface module 11. The compatibility module 15 may then take an action, generally as described above, in response to the command signal identifier rather than analysis of the command signal itself.

In the pass-through mode of operation, the compatibility module 15 generally instructs the interface module 11 to re-transmit the majority of command signals which are received. This may be achieved by a standing instruction to the interface module 11 to re-transmit all incoming command signals without substantive analysis by the compatibility module 15.

The compatibility module 15, however, will change the mode of operation of the interoperability unit 1 in response to a predetermined command signal as discussed herein. Receipt of this predetermined command signal by the interface module 11 causes the interoperability unit 1 to change mode of operation to the override mode and this change of mode is preferably implemented by the compatibility module 15. Receipt of a predetermined command signal by the interface module 11 also causes the interoperability unit 1 to change mode of operation to the pass-through mode and this change of mode is preferably implemented by the compatibility module 15.

The predetermined command signal which causes a change of mode may be issued by an input auxiliary unit 5 as a result of user operation of the input auxiliary unit 5 (the input auxiliary unit 5 may be a steering wheel or column mounted user interface control unit - for example).

As part of the change of mode to the override mode of operation, the compatibility module 15 may transmit a control signal to the switch module 17 to instruct the actuation thereof (see below for more details) and may cause initiation of one or both of the amplification module 12 and the media module 12 by the issuance of a control signal thereto.

As part of the change of mode to the pass-though mode of operation, the compatibility module 15 may transmit a control signal to the switch module 17 to instruct the actuation thereof (see below for more details) and may cause shutting down of one or both of the amplification module 12 and the media module 12 by the issuance of a control signal thereto.

### The Interoperability Unit - The Amplification Module

The amplification module 12 is configured to receive at least one media signal from the media module 16; the amplification module 12 and media module 16 are, therefore, communicatively coupled.

The amplification module 12 is configured to amplify the or each media signal received by the amplification module 12 and output a respective amplified media signal (i.e. media channel) to the switch module 17 with which the amplification module 12 is communicatively coupled.

The amplification module 12 may be actuatable between an 'on' and an 'off' state whereby when in the 'on' state the amplification module 12 amplifies a media signal received from the media module 16 and when in an 'off' state the amplification module 12 does not amplify the media signal and is at least partially powered down.

The amplification module 12 may be configured to be actuated between the 'on' and 'off' state by a command signal from the compatibility module 15. As such, the transition of the amplification module 12 from the 'off' to the 'on' state may be regarded as an initiation of the amplification module 12. Similarly, the transition of the amplification module 12 from the 'on' to the 'off' state may be regarded as a shutting down of the application module 12.

The amplification module 12 is configured to receive one or more control signals from the compatibility module 15 to control the amplitude (i.e. volume) of the amplified media signal output by the amplification module 12. The amplification module 12 may also include a plurality of stored settings for the amplification of certain frequency ranges of the media signal which is being amplified.

### The Interoperability Unit - The Media Module

The media module 16 may comprise a media source which may include a digital radio receiver (such as a DAB radio receiver), a locally stored digital media source (such as an MP3 (or other codec) player), another streamed media source (such as an internet radio device), or the like. In an embodiment, the media module 16 includes multiple media sources. In an embodiment, the media module 16 is integral with the interoperability unit 1. In an embodiment, the media module 16 comprises an interface which is operable to receive one or more media signals (i.e. one or more media channels) from an external media source and to transmit one or more control signals to the external media source (as generally depicted by the phantom arrows in figure 2).

The media module 16 is communicatively coupled to the amplification module 12 as discussed above. The media module 16 is preferably configured to output an analogue audio signal to the amplification module 12. In an embodiment, the media module 16 is configured to output a digital audio signal to the amplification module 12 (in which case, the amplification module 12 may include a digital amplifier).

The media module 16 may be actuatable between an 'on' and an 'off' state whereby when in the 'on' state the media module 16 transmits or prepares to transmit a media signal to the amplification module 12 and when in an 'off' state the media module 12 does transmit a media signal to the amplification module 12 and may be at least partially powered down.

The media module 16 may be configured to be actuated between the 'on' and 'off' state by a command signal from the compatibility module 15. As such, the transition of the media module 16 from the 'off' to the 'on' state may be regarded as an initiation of the media module 16. Similarly, the transition of the media module 16 from the 'on' to the 'off' state may be regarded as a shutting down of the media module 16.

The media module 16 is configured to receive one or more control signals from the compatibility module 15 to control an aspect of the operation of the media module 16 and, therefore, the media signal which is output by the module 16. For example, a control signal issued by the compatibility module 15 to the media module 16 as the result of receipt of a command signal by the interface module 11, may cause the selection of a new track from the media module 16 or the changing of a radio station.

In an embodiment in which the media module 16 is a digital radio receiver, the media module 16 may include an aerial or an interface for the connection of an aerial.

### The Interoperability Unit - The Switch Module

The switch module 17 is communicatively coupled to the media input 13, the media output 14, and the output from the amplification module 12. The switch module 17 is configured to connect, selectively, the media output 14 with one or other of the media input 13 and the output from the amplification module 12. Operation (i.e. actuation) of the switch module 17 is preferably controlled by the compatibility module 15 which may issue a control signal to actuate the switch module 17. Thus, through the switch module 17 either the media input 13 or the output from the amplification module 12 is communicatively coupled to the media output 14.

The switch module 17 may include a series of switches for a plurality of channels of the media input 14 and the switches may be relays.

### The Interoperability Unit - The Media Input and The Media Output

The media input 13 and the media output 14 comprise one or more channels for the receipt (in the case of the media input 13) and transmission (in the case of the media output 14) of one or more media signals.

The media input 13 may, for example, comprise a first and second channel each operable to carry a respective media signal - with the media signals representing left and right stereo audio channels.

The media output 14 may, similarly comprise a first and second channel each operable to carry a respective media signal - with the media signals representing left and right stereo audio channels.

The media input 13 and media output 14 may include a channel configured to carry a video signal as the media signal.

Thus, as will be understood, media signals as described herein may be video or audio media signals.

### The Interoperability Unit - Further components

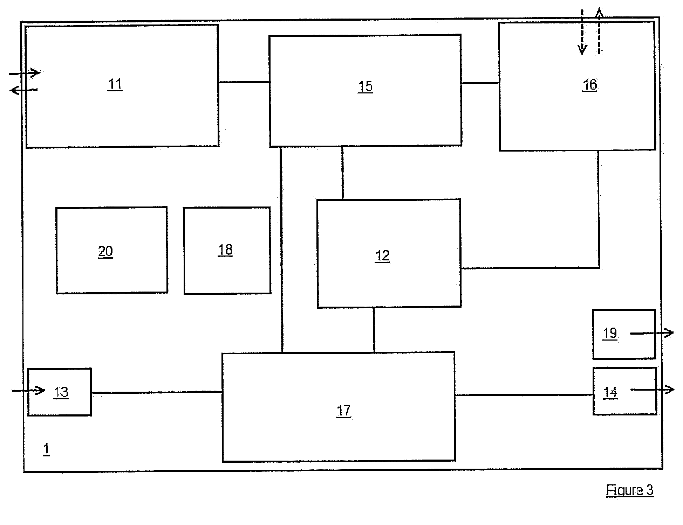

With reference to figure 3 further modules of the interoperability unit 1 may be provided and examples of such further components are given below.

### The Interoperability Unit - Power supply module

According to embodiments, the interoperability unit 1 further comprises a power supply module 18. This power supply module 18 may be in the form of a battery or may be suitable to be connected to an external power supply - for example a vehicle 200 power supply.

### The Interoperability Unit - Text Output Module

In an embodiment, the interoperability unit 1 is further provided with a text output module 19. The text output module 19 is configured to output text information to the head unit 3 and/or an output auxiliary unit 7 in the form of a display screen 9.

The text output module 19 may include a radio (or other wireless) transmitter which is operable to output encoded text information. This encoded text information is encoded in a format which can be decoded by the head unit 3 and/or output auxiliary unit 7 as necessary.

In an embodiment, the encoded text information is encoded using the Radio Data System (RDS) communication protocol. This information can be received by a radio receiver with an RDS decoder and decoded for display to a user. It will be appreciated that the RDS communication protocol is just one example of a suitable radio broadcasting protocol which may be used by embodiments of the invention.

Thus, a suitably equipped head unit 3 with an RDS decoder and an analogue radio receiver can be adjusted to a predetermined radio frequency to receive encoded text information transmitted by the text output module 19 of the interoperability unit 1; this information may be displayed by the head unit 3 (in a display screen thereof) and/or by an output auxiliary unit 7 in the form of a display screen 9. Indeed, in embodiments, the information may be displayed using multiple output auxiliary units 7 on multiple display screens 9.

The text information may be transmitted by the interoperability unit 1 to one or more output auxiliary units 7 by the use of one or more command signals, and/or may be transmitted by the head unit 3 to one or more output auxiliary units 7 by the use of one or more command signals - which may be intercepted and re-transmitted by the interoperability unit 1.

The text output module 19 may be configured to output the encoded text information using the RDS communication protocol using one of two or more selectable radio frequencies which may be selected by a user or installer. The interoperability unit 1 may be provided with a switch (not shown) which allows for the selection of one of the selectable radio frequencies - jumper pins may also be provided for the same purpose or an installer may be able to select the selectable radio frequency using a maintenance and configuration device (not shown).

The encoded text output by the text output module 19 may include information which is received from the media module 16. This information may include information such as the name of the current track, the name of the artist, the name of the album of which the track is a part, the name of the current radio station, the name of the current radio program and the like.

Thus, the text output module can be used to provide the user with information and this information may be relevant to the current media being output by the interoperability unit 1.

The encoded text output by the text output module 19 may include menu options for control of some aspect of the interoperability unit 1 - including an aspect of the configuration of the interoperability unit 1.

Thus, when the interoperability unit 1 is in the override mode of operation and a predetermined command signal is received by the interface module 11, the compatibility module 15 may instruct the text output module 19 to display a first menu item. The compatibility module 15 may instruct the text output module 19 to display a second menu item when another predetermined command signal is received by the interface module 11. Another predetermined command signal received by the interface module 11 may, accordingly, result in the compatibility module 15 instructing the display of a first sub-menu item associated with the menu item displayed when that command signal is received. In a similar manner the receipt of predetermined command signals may cause the updating of a stored parameter in the compatibility module 15 and/or the amplification module 12. For example, the menu provided by the text output module 19 may be used to alter the amplification of certain frequency ranges of media signal which are amplified by the amplification module 12. These parameters may be stored in volatile or non-volatile memory (not shown) within the interoperability unit 1. This memory may form part of the compatibility module 15 or part of the amplification module 12 - for example.

It will be appreciated that the text output module 19 may use a wired connection to the head unit 3 and/or an output auxiliary unit 7 in the form of a display screen 9 - if applicable.

### The Interoperability Unit - Auto-tune module

In an embodiment, the interoperability unit 1 includes an auto-tune module 20. The auto-tune module 20 is configured to interact with the head unit 3 to cause an analogue radio receiver of the head unit 3 to select a radio frequency which is appropriate to allow for the operation of the text output module 19 as described above. This auto-tune module 20 may be activated when the interoperability unit 1 is switched from the pass-through mode of operation to the override mode of operation.

### Fitting of the Interoperability Unit

The interoperability unit 1 is configured for retrofitting to an existing vehicle media system 100 in a vehicle 200. The vehicle 200 may be any vehicle having a vehicle media system 100 - for example, a car, a plane, a lorry, a bus, a boat and the like.

An installer will typically remove or partially remove the head unit 3 from the vehicle 200 to gain access to the connections of the head unit 3 to the other components of the vehicle media system 100 - for example the auxiliary units 5,7 and other units 10. In some instances, access can be gained to these connections without removal or partial removal of the head unit 3 - for example, it may be possible to gain access to the connections by removal of a cover-plate of the dashboard of the vehicle 200.

The installer disconnects the majority of the connections between the head unit 3 and the other components of the vehicle media system 100. The installer may leave a power supply connection connected.

The head unit 3 is then connected to the interoperability unit 1 and the interoperability unit 1 is connected to the other components of the vehicle media system 100.

The interoperability unit 1 is, therefore, positioned between the head unit 3 and the other components of the vehicle media system 100 in terms of the communicative couplings therebetween. The interoperability unit 1 is, therefore, positioned such that it can intercept media signals output by the head unit 3 and command signals issued by or intended for the head unit 3.

The installer may install the appropriate compatibility module 15 if the compatibility module 15 is removable, or may configure a multi-vehicle/system type compatibility module 15 for operation with the vehicle/system type. This may be done before or after the interoperability unit 1 is connected to the head unit 3 and other components of the vehicle media system 100.

The installer then typically reinstalls the head unit 3 (if removed) and/or takes any necessary steps to replace a cover-plate removed for the installation or otherwise make-good the aesthetic appearance of the part of the vehicle 200 which may have been altered in order to gain access to the connections between the head unit 3 and the rest of the vehicle media system 100.

In an embodiment in which a text output module 19 is provided in the interoperability unit 1, the installer may activate an analogue radio receiver of the head unit 3 to tune the receiver to the frequency required for the receipt of encoded text by the receiver from the interoperability unit 1. This frequency may be stored in a memory of the head unit 3 such that the frequency can be selected by the use of a shortcut button (commonly this is referred to as the storing of a "preset radio station").

### Operation of the Interoperability Unit

Various operations of embodiments of the interoperability unit 1 as substantially described above are discussed below.

In the pass-through mode of operation the vehicle media system 100 operates in substantially the same manner as it would do in without the interoperability unit 1 present.

For example, command signals issued by the or each input auxiliary unit 5 which would normally be sent to the head unit 3 if the interoperability unit 1 were not fitted are received by the interoperability unit 1 - specifically by the interface module 11. The interface module 11 transmits the command signals, parts thereof, or identifiers thereof to the compatibility module 15. The compatibility module 15 analyses the received command signals/parts/identifiers and decides what action to take in response.

The command signals may, for example, include a signal to increase the volume of audio being output by the head unit 3 or to change radio stations using an analogue radio receiver of the head unit 3.

In the pass-through mode of operation, the compatibility module 15 instructs the interface module 11 to re-transmit the majority of the command signals to the head unit 3. Thus, the head unit 3 will receive the command signals and act in the same manner that the unit 3 would normally operate if the interoperability unit 1 were not present. In other words, the command signals pass through the interoperability unit 1.

In the pass-through mode of operation one or more media signals output by the head unit 3 are transmitted to the media input 13 of the interoperability unit 1. These one or more media signals may comprise, for example, audio and/or video signals which, if the interoperability unit 1 were not present, would be transmitted to one or more of the output auxiliary units 7 - i.e. to one or more speakers 8 or to one or more video displays 9.

In the pass-through mode of operation, the compatibility module 15 operates the switch module 17 to connect the media input 13 to the media output 14. Thus, the or each media signal passes through the interoperability unit 1 to one or more of the or each output auxiliary units 7 - achieving the same effect as if the interoperability unit 1 were not present.

In pass-through mode the interoperability unit 1 is substantially invisible to the user operating the vehicle media system 100. However, the compatibility module 15 listens for a predetermined command signal and on receipt of the predetermined command signal the interoperability unit 1 switches from pass-through mode to the override mode of operation.

In response to receipt of the predetermined command signal, the compatibility module 15 operates with switch module 17 to disconnect the media input 13 from the media output 14 and to connect the output from the amplification module 12 to the media output 9. In addition, an output of the media module 16 may be connected to the media output 14 by actuation of the switch module 17 (this output may not pass through the amplification module 12).

Thus, as will be appreciated, in the override mode of operation, the output auxiliary unit 7 or units 7 are driven by the interoperability unit 1 and not by the head unit 1.

When in the override mode of operation, the compatibility module 15 does not typically instruct the passing of the majority of received command signals to the head unit 3. Instead, the compatibility module 15 intercepts and interprets the command signals to control the operation of the interoperability unit 1.

The compatibility module 15 may permit the re-transmission of one or more types of command signal to the head unit 3 if that signal is required for desired operation of the head unit 3. For example, a command signal may be a signal that indicates one or more electrical systems of the vehicle 200 have been activated (an ignition signal); this signal may be required to activate the head unit 3 and cause the head unit 3 to power-up. Therefore, the compatibility module 15 may allow this command signal to be re-transmitted to the head unit 3 even if the command signal is received in the override mode of operation. Similarly, the re-transmission of a command signal indicating that one or more electrical systems of the vehicle are to be turned off may be permitted.

The user may, therefore, operate an input auxiliary unit 5 (e.g. a steering wheel or steering column mounted user control interface) to cause the issuance of a command signal. This command signal is received by the interface module 11 and analysed by the compatibility module 15 which may, for example, issue a control signal to the media module 16 to change the radio station (if the media module 16 is a digital radio receiver) or change the track being played (if the media module 16 is a source of stored digital media) - for example. The command signal is not re-transmitted to the head unit 3 and, therefore, has no effect on the operation of the head unit 3. If received by the head unit 3 that same command signal may have, for example, caused the selection of a different radio station or the selection of a new track.

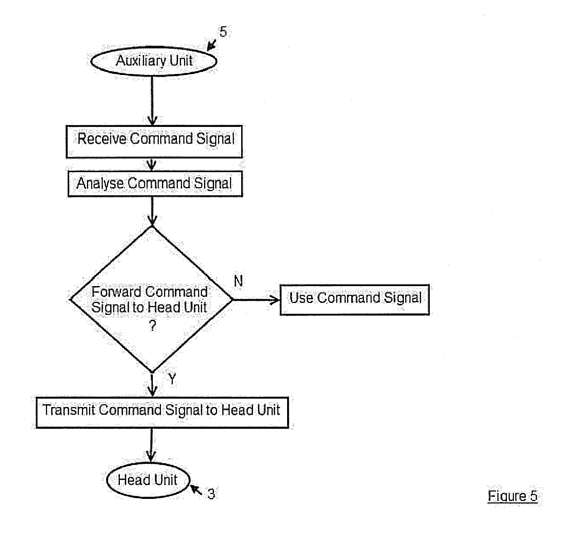

A general method of operating the compatibility module 15 of an embodiment is shown in figure 5.

As will be appreciated, the user can, therefore, use an input auxiliary unit 5 for an existing vehicle media system 100 to control an aspect of the operation of the interoperability unit 1.

If a text output module 19 is provided in the interoperability unit 1, then text may be displayed on a display screen of the head unit 3 and/or an output auxiliary unit 7 substantially as described above.

### Media modules

It will be appreciated that the media module 16 described herein may be a module which is configured to output a media signal which may be a video or an audio signal. This may be a video or audio signal which is intended for entertainment purposes or may, for example, be the output from a navigation device. In other words, the media module 16 may, in an embodiment, include or be connected to a navigation device such as a satellite navigation device.

Video signals do not need to be amplified by the amplification module 12 but may be passed to some other video signal processing module (not shown) of the interoperability unit 1 for processing prior to output through the media output 14.

### Command Signals

Command signals may comprise notification of the actuation of a button or dial. A command signal may also be indicative of the length of actuation of a button or dial (for example, if a button is pressed and held), the frequency of actuation of a button or dial, the number of actuations of a button or dial in a predetermined period, and the like. In embodiments, a command signal comprises a substantially continuous signal and changes in that signal represent commands. In embodiments, a command signal may be a signal to be used in the display the whole or a part of a graphical user interface which may include text. The term should be interpreted accordingly.

A command signal may include an origin identifier indicating the origin of the command signal and may also include a target identifier indicating the intended recipient of the command signal. In an embodiment a command signal is output to a bus or network to which the interoperability unit 1 is connected, the interoperability unit 1 identifies the origin and intended recipient of the command signal based on one or more identifiers of the command signal (which may not be an origin or target identifier). This information may then be used by the interoperability unit 1 to decide what action to take in response to the command signal.

### Input/Output Auxiliary Units

Input 5 and output 7 auxiliary units have been described herein. It will be appreciated that these units may, in fact, be combined in a single hardware unit - for example, a display screen which is touch sensitive.

### Head unit

The head unit 3 has been assumed herein to include an amplifier and an analogue radio receiver. These components of may be provided in other units. It will be appreciated that the embodiments of the present invention are also applicable in relation to such vehicle media systems 100.

### Hardware

The interoperability unit 1 may include a processor which is configured to perform the function of all or some of the modules described herein. It will be understood that one or more aspects of the modules described herein may be implemented in software or firmware within the interoperability unit 1.

The interoperability unit 1 is preferably provided in a case made out of a nonconductive material - such as plastic - which is sized such that it can fit within the cavity normally provided behind a head unit 3 which is fitted to a vehicle 200. A plurality of wires may extend from the case with associated connectors to allow the interoperability unit 1 to be connected substantially as described herein.

Embodiments of the present invention include a method of retrofitting an interoperability unit 1 to a vehicle media system 100, an interoperability unit 1, a vehicle 200 including an interoperability unit 1, a kit for fitting an interoperability unit 1 to a vehicle media system 100.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. An interoperability unit for adding a media source to a vehicle media system, the unit comprising:
an interface module configured to transmit a command signal through a first connection and to receive a command signal through a second connection;
a media module configured to output a media signal; and
a compatibility module configured, in a first mode of operation, to cause a first command signal received through the second connection of the interface module to be re-transmitted through the first connection of the interface module, and, in a second mode of operation, to intercept a first command signal received through the second connection of the interface module and to use the first command signal to control an aspect of the media signal output by the media module.

2. A unit according to claim 1, wherein the compatibility module is configured, in the first mode of operation, to prevent the output of the media signal from the interoperability unit.

3. A unit according to claim 2, wherein the compatibility module is further configured, in the first mode of operation, to prevent the output of the media signal from the media module.

4. A unit according to any preceding claim, further comprising a switch module and a media input, wherein the switch module is configured to receive a control signal from the compatibility module and to switch, in response to the control signal, between a first configuration in which a media signal received from the media input is output by the interoperability unit and a second configuration in which a media signal output by the media module is output by the interoperability unit.

5. A unit according to any preceding claim, wherein the media signal comprises an audio or a video media signal.

6. A unit according to any of claims 1 to 4, further comprising an amplification module configured to amplify an audio media signal output by the media module.

7. A unit according to any preceding claim wherein:
the media module is a streamed digital media device; AND/OR
the media module is a digital radio receiver; AND/OR
the media module is a DAB radio receiver.

8. A unit according to any of claims 7, wherein, when in the second mode of operation, the compatibility module is configured, in response to the command signal, to change station or channel.

9. A unit according to any of claims 1 to 6, wherein the media module is a locally stored digital media device.

10. A unit according to any preceding claim, further comprising a text output module configured to output encoded text information.

11. A unit according to claim 10, wherein
the encoded text information is output using the RDS protocol; AND/OR
the encoded text information is output using the RDS protocol and further comprising an auto-tune module configured to transmit an auto-tune signal.

12. A vehicle media system including a unit according to any preceding claim.

13. A vehicle media system according to claim 12, further comprising:
a head unit coupled to the interoperability unit by the first connection; AND/OR
an input auxiliary unit coupled to the interoperability unit by the second connection; AND/OR
an input auxiliary unit coupled to the interoperability unit by the second connection, wherein the input auxiliary unit is a steering wheel or steering column mounted user control interface; AND/OR
an output auxiliary unit; AND/OR
an output auxiliary unit, wherein the output auxiliary unit comprises at least one speaker and/or at least one display screen.

14. A vehicle including a vehicle media system according to any of claims 12 or 13.

15. A method of fitting an interoperability unit according to any of claims 1 to 11 to a vehicle media system, the method comprising:
connecting the interoperability unit between at least two components of the vehicle media system.
